# EUROPEAN PATENT APPLICATION

(11) **EP 4 738 842 A1**
(43) Date of publication of application: **06.05.2026**
(21) Application number: 24830520.3
(22) Date of filing: 14.06.2024
(51) Int. Cl.: H04N 21/2343

(54) **VIDEO EDITING METHOD AND APPARATUS, DEVICE, AND MEDIUM**

(30) Priority: 27.06.2023 CN 202310773317
(71) Applicant: Beijing Zitiao Network Technology Co., Ltd., Beijing 100190 (CN)
(72) Inventor: HE, Panlong, Beijing 100028 (CN)
(74) Representative: Marks & Clerk LLP
(86) International application number: PCT/CN2024/099181
(87) International publication number: WO 2025/001874

(57) **Abstract**

The present disclosure relates to a video editing method and apparatus, a device, and a medium. The method includes: in response to receiving a request from a first user to invite a second user to edit a first draft file, providing the first draft file to the second user (S102); obtaining a second draft file, based on an online editing operation of the second user for the first draft file (S104); in response to receiving a request from the second user to provide the second draft file to the first user, providing the second draft file to the first user (S106); and in response to receiving a confirmation instruction for a specified draft file from the first user, generating a target video, based on the specified draft file, wherein the specified draft file is the second draft file, or a file adjusted by the first user based on the second draft file (S108). The present disclosure can effectively improve the convenience for providing help to edit videos while reducing the interaction costs.

## Description

The present disclosure claims the priority from the CN patent application No. 202310773317.8 entitled "VIDEO EDITING METHOD AND APPARATUS, DEVICE, AND MEDIUM" filed with the China National Intellectual Property Administration on June 27, 2023, the content of which is hereby incorporated by reference in its entirety.

### FIELD

The present disclosure relates to the technical field of video processing, and more specifically, to a video editing method and apparatus, a device, and a medium.

### BACKGROUND

With the improvement of life, people have increasingly high requirements for videos. However, due to lack of sufficient video editing skills, or enough time or energy to edit videos, some people seek help from others for editing videos. The existing method of seeking help from others for editing videos are troublesome. For example, users have to package and transmit materials or finished videos through emails, communication applications, or the like, incurring high interaction overheads.

### SUMMARY

In order to solve, or at least partly solve, the above technical problem, embodiments of the present disclosure provide a video editing method and apparatus, a device, and a medium.

Embodiments of the present disclosure provide a video editing method applier to a server, comprising: in response to receiving a request from a first user to invite a second user to edit a first draft file, providing the first draft file to the second user, wherein the first draft file is a file uploaded and stored by the first user to the server, and the first draft file comprises materials, and editing information for indicating an editing operation for the materials; obtaining a second draft file, based on an online editing operation of the second user for the first draft file; in response to receiving a request from the second user to provide the second draft file to the first user, providing the second draft file to the first user; and in response to receiving a confirmation instruction for a specified draft file from the first user, generating a target video based on the specified draft file, wherein the specified draft file is the second draft file, or a file adjusted by the first user based on the second draft file.

Optionally, the first draft file carries editing requirement information of the first user, and/or the second draft file carries editing comment information of the second user.

Optionally, providing the first draft file to the second user comprises: authorizing the second user to edit the first draft file, and in response to receiving a file opening request from the second user, displaying the first draft file to the second user for allowing the second user to edit the first draft file online.

Optionally, the method further comprises: in a case of detecting that the first user sends a link of the first draft file to the second user via a chat page, confirming receipt of the request from the first user to invite the second user to edit the first draft file; and in a case of detecting that the second user sends a link of the second draft file via the chat page, confirming receipt of the request from the second user to provide the second draft file to the first user.

Optionally, the method further comprises: in response to receiving a request from the first user to post the target video, posting the target video on a specified platform, wherein the target video carries identifier information of the second user.

Optionally, the method further comprises: in response to receiving a re-invitation request for the second draft file from the first user, providing a name list to the first user for allowing the first user to select a new second user from the name list.

Optionally, a number of the second users is one or more; and the second user is a user in a friend list of the first user, or a user in an editor list provided by the server to the first user.

The embodiments of the present disclosure provide a video editing apparatus applied to a server, comprising: a first file providing module for, in response to receiving a request from a first user to invite a second user to edit a first draft file, providing the first draft file to the second user, wherein the first draft file is a file uploaded and stored by the first user to the server, and the first draft file comprises materials, and editing information for indicating an editing operation for the materials; a first file editing module for obtaining a second draft file, based on an online editing operation of the second user for the first draft file; a second file providing module for, in response to receiving a request from the second user to provide the second draft file to the first user, providing the second draft file to the first user; and a video generating module for, in response to receiving a confirmation instruction for a specified draft file from the first user, generating a target video, based on the specified draft file, wherein the specified draft file is the second draft file, or a file adjusted by the first user based on the second draft file.

The embodiments of the present disclosure further provide an electronic device, comprising: a processor; and a memory for storing instructions executable by the processor; wherein the processor is used to read the executable instructions from the memory, and execute the instructions to implement the video editing method provided by the embodiments of the present disclosure.

The embodiments of the present disclosure further provide a computer readable storage medium storing a computer program that is used to perform the video editing method provided by the embodiments of the present disclosure.

The embodiments of the present disclosure also provide a computer program product comprising a computer program, wherein the computer program, when executed by a processor, implements the video editing method provided by the embodiments of the present disclosure.

According to the technical solution provided by the embodiments of the present disclosure, the server stores a first draft file uploaded by a first user; in response to receiving a request of the first user to invite a second user to edit the first draft file, the server can provide the first draft file to the second user; the server can obtain a second draft file based on an online editing operation of the second user for the first draft file; instructed by the second user, the server provides the second draft file to the first user; finally, when the first user confirms a specified draft file (the second draft file, or the second draft file adjusted by the first user), the server generates a video based on the specified draft file. In this way, the first user and the second user can directly interact with respect to draft files via the server, omitting the redundant steps of packaging and transmitting files, and the like, which can improve the convenience for providing help to edit videos while reducing the interaction costs.

It would be appreciated that the Summary is not intended to identify key features or essential features of the present disclosure, nor is it intended to be used to limit the scope of the present disclosure. Other features of the present disclosure will be made apparent through the following description.

### BRIEF DESCRIPTION OF THE DRAWINGS

The accompanying drawings, which are incorporated into the Description and formulate a part thereof, show embodiments in line with the present disclosure and explain, together with the Description, the principle of the present disclosure.

In order to make clearer the technical solution according to the embodiments of the present disclosure or the prior art, brief introduction of the drawings required in the embodiments or the prior art will be provided below. Apparently, the ordinary skill in the art could derive other drawings on the basis of these drawings, without doing creative work.
FIG. 1 illustrates a schematic flowchart of a video editing method provided by the embodiments of the present disclosure;
FIG. 2 illustrates a schematic diagram of video editing provided by the embodiments of the present disclosure;
FIG. 3 illustrates a schematic diagram of a video editing interactive interface provided by the embodiments of the present disclosure;
FIG. 4 illustrates a schematic diagram of a video editing interactive interface provided by the embodiments of the present disclosure;
FIG. 5 illustrates a schematic diagram of a video editing interactive interface provided by the embodiments of the present disclosure;
FIG. 6 illustrates a schematic diagram of a video editing interactive interface provided by the embodiments of the present disclosure;
FIG. 7 illustrates a schematic diagram of a video editing interactive interface provided by the embodiments of the present disclosure;
FIG. 8 illustrates a schematic diagram of a video editing interactive interface provided by the embodiments of the present disclosure;
FIG. 9 illustrates a schematic diagram of a video editing interactive interface provided by the embodiments of the present disclosure;
FIG. 10 illustrates a schematic diagram of a structure of a video editing apparatus provided by the embodiments of the present disclosure; and
FIG. 11 illustrates a schematic diagram of a structure of an electronic device provided by the embodiments of the present disclosure.

### DETAILED DESCRIPTION OF EMBODIMENTS

In order to make the above objective, features and advantages much clearer, description of the solution according to the present disclosure will be further detailed below. It is worth noting that the embodiments of the present disclosure and the features therein could be combined with each other if no conflict is generated.

Although lots of details will be described below for a full understanding of the present disclosure, the present disclosure could be implemented in other ways than the one described herein. Obviously, the embodiments of the present disclosure are only a part of the embodiments of the present disclosure, not all of them.

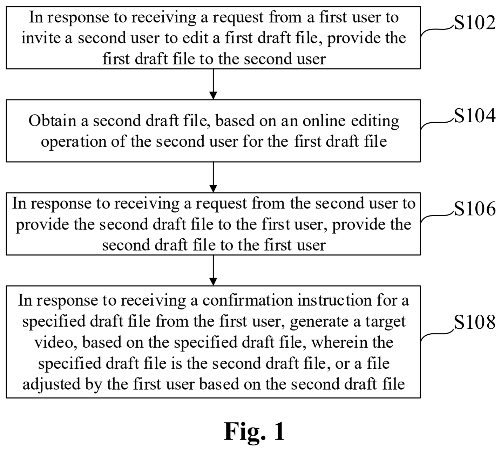

FIG. 1 illustrates a schematic flowchart of a video editing method provided by the embodiments of the present disclosure. The method can be performed by a video editing apparatus that can be implemented using software and/or hardware, and is typically integrated in an electronic device which may be, for example, a server. As shown therein, the method mainly includes the following steps S102 through S108:
Step S102: In response to receiving a request from a first user to invite a second user to edit a first draft file, the first draft file is provided to the second user.

In some example embodiments, the number of the second users is one or more, which is not limited herein. The second user may be a user in a friend list of the first user, or a user in an editor list provided by the server to the first user. During actual use, the first user can select and invite a second user to provide assistance in editing based on the first draft file, according to the needs.

It is worth noting that the first draft file is a file uploaded and stored by the first user to the server, which may be specifically read as a project file generated when a user edits a video. In a case where a user edits a video using a video editing application, a respective draft file may be generated automatically based on materials selected by the user and the user operation. The first draft file includes materials, and editing information for indicating an editing operation for the materials. Wherein, the materials include, but are not limited to, pictures, videos, text, effects, and the like, which are not limited herein; editing information may be specifically used to indicate an editing operation type and an editing operation order used for the materials, where the editing operation type may be any operation type for processing materials, including, for example, adding a picture, adding text to a specified position in a picture, splicing videos, adding a transition between two pictures, or the like, details of which are omitted herein.

When the first draft file is provided to the second user, the second user may be authorized to edit the first draft file, and upon receipt of a file opening request from the second user, the first draft file is displayed to the second user for allowing the second user to edit the first draft file online. In this way, the safety of draft files may be guaranteed effectively. In addition, the second user may directly edit the first draft file online. Specifically, the second user may load content to be edited in the first draft file online in a streaming manner and perform an editing operation, without downloading the first draft file to the local computer, which may effectively improve the efficiency of providing help to edit videos while saving resources.

Step S104: A second draft file is obtained based on an online editing operation of the second user for the first draft file.

The server may directly obtain the online editing operation of the second user, and edit the first draft file based on the online editing operation, so as to obtain the second draft file. The second user may perform an editing operation or multiple editing operations as required, and perform a saving operation following each editing operation. Moreover, when there are multiple second users, the multiple users may collaborate online to edit and modify the first draft file, which is not limited herein.

Step S106: In response to receiving a request from the second user to provide the second draft file to the first user, the second draft file is provided to the first user.

After confirming that the first draft file has been edited, the second user may initiate a request to provide the second draft file to the first user for review.

Step S108: In response to receiving a confirmation instruction for a specified draft file from the first user, a target video is generated based on the specified draft file. Wherein, the specified draft file is the second draft file, or a file adjusted by the first user based on the second draft file.

In other words, the first user may directly generate a target video based on the second draft file returned by the second user, or may perform adjustment to the second draft file returned by the second user according to the needs, where the adjustment may be a further editing operation performed by the first user, or may be an operation of forwarding the file to others for processing, or returning to the second user for processing, or the like, where the adjustment performed by the first user is not specifically limited herein. Then, the first user may generate the target video based on the adjusted file.

In this way, the first user and the second user may directly interact with respect to draft files through the server, without the redundant steps of packaging and transmitting files, and the like, which may improve the convenience for providing help to edit videos while reducing the interaction costs.

In order to further reduce the costs for communication between users, the first draft file carries editing requirement information of the first user, and/or the second draft file carries editing comment information of the second user. During the actual use, the user may add an comment for the content to be edited in the first draft file, to inform the second user of the editing requirement. It would be appreciated that video editing typically involves multiple types of materials and multiple types of editing operations. In the related technology, if a user requests assistance from others in editing a video, the user has to make additional verbal or written statements to others, which makes the communication quite inconvenient. However, in the embodiments of the present disclosure, as the first draft file directly carries the editing requirement information, the second user may conveniently and clearly know the editing requirements of the first user in conjunction with the materials/editing information in the first draft file, and thus perform accurate editing according to the editing requirements of the first user, which may ensure the editing effect. In addition, the editing information may be annotated by the second user in the second draft file, such as adding editing comments such as "crop 1s" and "transition added" to the modification position, or the server may automatically record and annotate the editing information based on the online editing operation of the second user. In this way, the first user may clearly learn the information on editing performed by the second user for the first draft file, while the second user does not need to provide additional explanations to the first user, which may effectively save the user time and improve the communication efficiency.

In some implementation examples, in order to improve convenience for seeking help from other user to edit a video, in the embodiments of the present disclosure, the first user and the second user may interact on a chat page with respect to draft files, and in a case of detecting that the first user sends a link of the first draft file to the second user via the chat page, receipt of the request from the first user to invite the second user to edit the first draft file is confirmed. In a case of detecting that the second user sends a link of the second draft file to the first user, receipt of the request from the second user to provide the second draft file to the first user is confirmed. In this way, the users may directly interact with each other on the chat page; the draft files are stored on the server; upon detecting transmission of a link of a draft file between users, the server may confirm that a user needs to provide the draft file to the other party, while the other party may directly browse and edit the draft file online, without downloading the draft file. Such method may not only save the resources effectively, but may also simplify the draft file interaction process between users, thereby reducing the costs for communication between users, and improving the user experience.

Furthermore, the method further includes: in response to receiving a request from the first user to post the target video, posting the target video on a specified platform, wherein the target video carries identifier information of the second user. Not only may the first user post the target video conveniently, but others may also learn participants of the target video when browsing the target video on the specified platform. In this way, it is convenient for others to invite the second user for editing, but also helpful to improve the second user's willingness to help editing to a certain extent.

Considering that the first user may not be satisfied with the second draft file provided by the second user, or may desire to additionally invite others to edit the draft file, in the embodiments of the present disclosure, a name list may be provided to the first user in response to receiving a re-invitation request for the second draft file from the first user for allowing the first user to select a new second user from the name list. The name list includes a friend list and/or an editor list. In this way, the first user may re-select a further second user to edit the video.

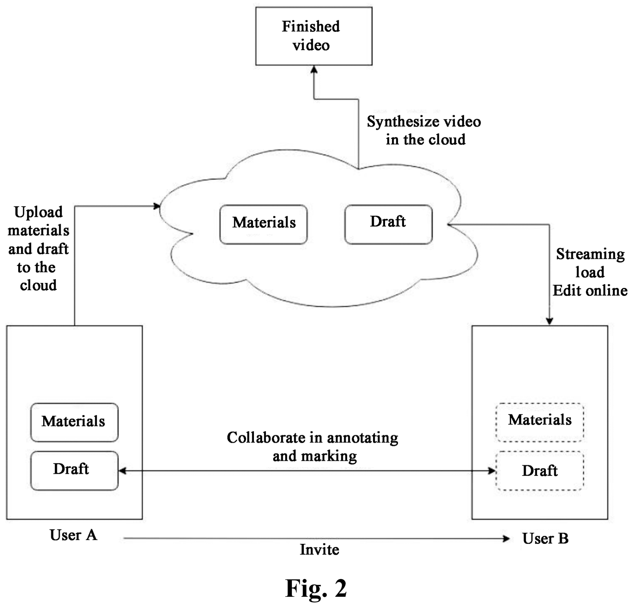

For ease of understanding of the video editing method provided by the embodiments of the present disclosure, reference may also be made to FIG. 2 that illustrates a schematic diagram of video editing. In FIG. 2, the user A (corresponding to the first user as mentioned above) invites the user B (corresponding to the second user as mentioned above) to assist in video editing, and the user B may be a friend of the user A, or a professional editor, which is not limited herein. Specifically, the combination of the materials and the draft in FIG. 2 is the draft file mentioned above, which may also be referred to as video editing project file; and the draft in FIG. 2 includes the editing information mentioned above. The method of uploading the material draft to the cloud in FIG. 2 includes uploading and storing the materials and the draft onto the server, and the user B may edit the materials and the draft online through streaming loading, without loading the same to the local computer, which may not only save the resources, but may also be more efficient and convenient. In addition, the user A and the user B may collaborate in making comments and marks on the draft, such that either party may clearly learn the needs or changes of the other party, thereby effectively improving the efficiency of communication between users.

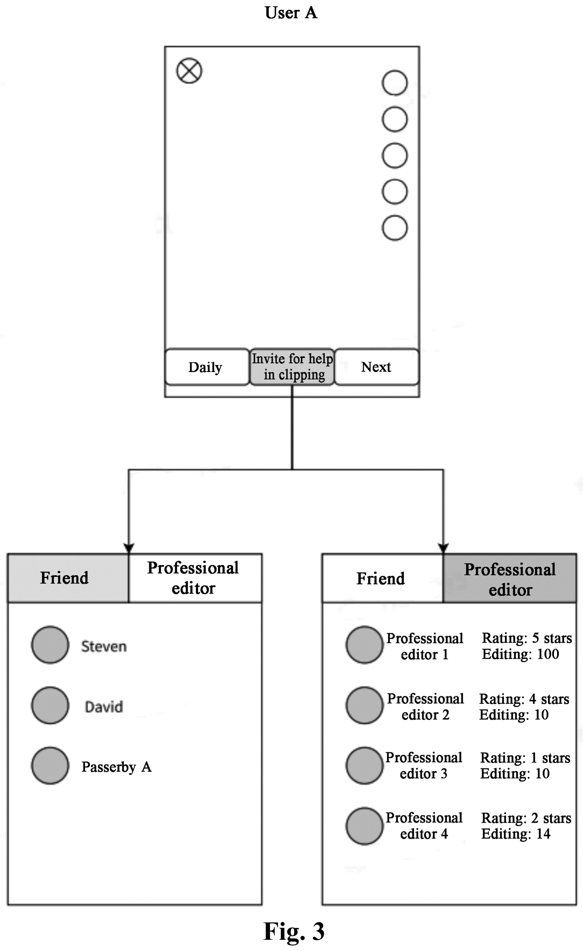

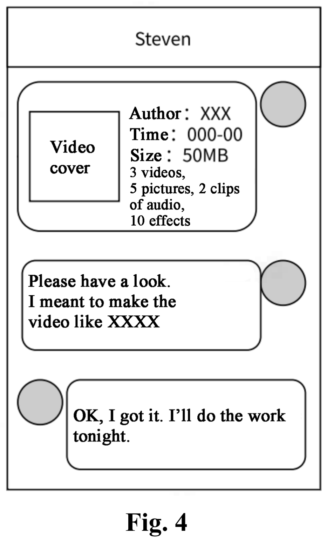

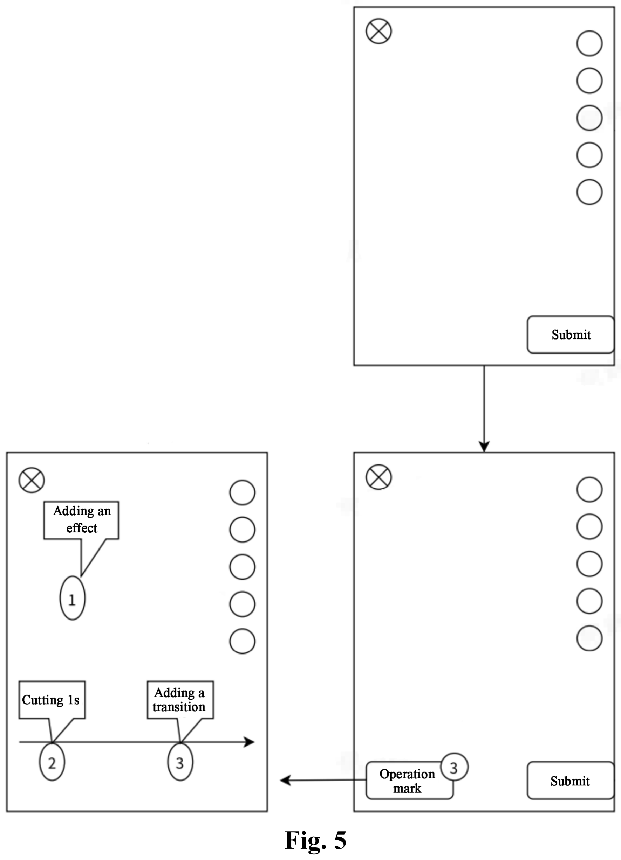

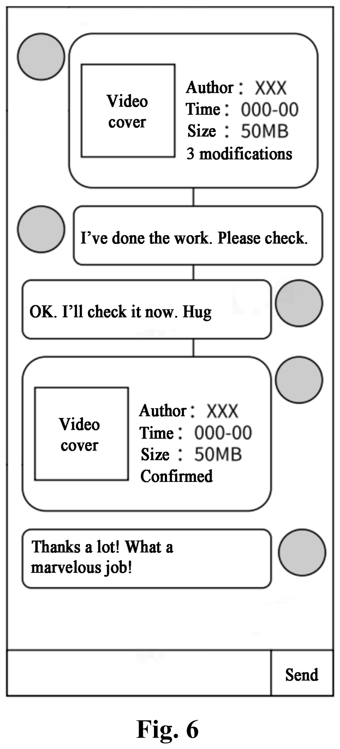

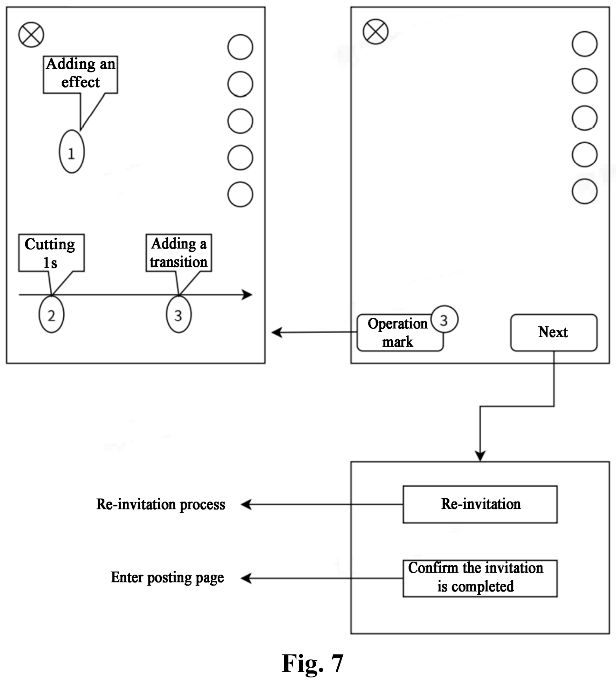

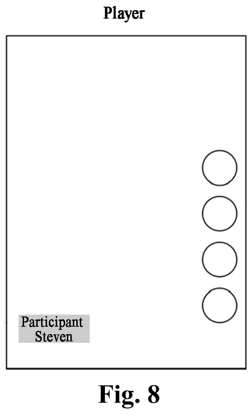

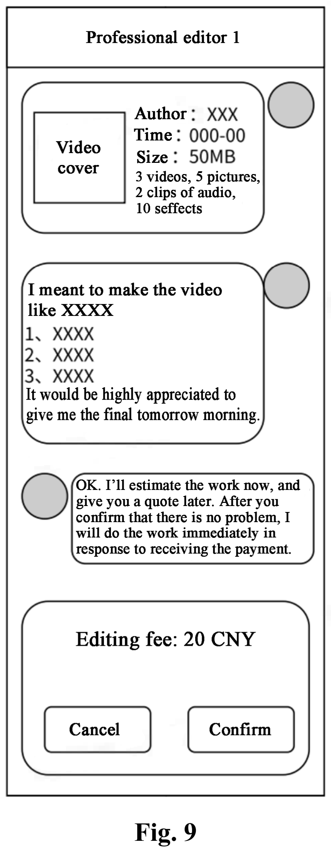

On the basis, reference below will be made to Figs. 3-9 that are a schematic diagram of a video editing interactive interface, respectively, where a process of the user A (corresponding to the first user mentioned above) inviting the user B (corresponding to the second user mentioned above) to edit a video is illustrated. In FIG. 3, a trigger control for inviting others for video editing is displayed on the video editing interactive interface of the user A. After the user A has triggered the control, a friend list or a professional editor list is displayed to the user, to enable the user to make a selection according to needs. In FIG. 4, assumed that the user A selects Steven from the friend list, the user A may directly communicate with Steven on the chat page, and send a link of a draft file to be edited (i.e., the first draft file) to Steven. At this time, the server may determine that the user A invites Steven to edit the first draft file, and may therefore authorize Steven to edit the first draft file, to enable Steven to successfully open the link of the first draft file and perform online editing. FIG. 5 illustrates the Steven's interface. After Steven has edited the first draft file, information on operation marks may be displayed on the interface. For example, a specific type of editing operation is clearly marked at a respective position where Steven has performed the editing operation, to allow the user A to clearly know the change to the first draft file. In FIG. 6, having completed the editing, Steven may send a link of the edited second draft file to the user A, and the user A may further confirm the second draft file and send a confirmation message to Steven. FIG. 7 illustrates an interface after the user A has opened the second draft file. The user A may view the Steven's editing information by triggering an operation mark control, and may further confirm the second draft file edited by Steven, or may re-invite others to assist in video editing. After confirming the second draft file edited by Steven, the user A may generate a video based on the second draft file edited by Steven, and directly enter the posting page to post the video. In FIG. 8, when the video is posted, the name of Steven may also be displayed, to allow others to clearly know the video participant. Moreover, during actual use, if the user A invites a professional editor to edit the video, the professional editor should be paid after the video editing has been completed. For example, as shown in FIG. 9, the two parties may interact with respect to payment on the chat page. It would be appreciated that the description about Figs. 3-9 is provided only exemplarily, and should not be construed as a limitation.

The application scenario of the video editing method is not limited in the embodiments of the present disclosure. For example, a user may invite a further user to edit a video, or may invite other users to collaborate in video editing, to reduce the video editing time; or two users may edit a video in turn, which may improve the interactive experience of users.

In a word, the video editing method provided by the embodiments of the present disclosure may enable users to directly interact with respect to draft files through a server, omitting redundant steps of packaging and transmitting files, and the like, which may improve the video editing convenience and efficiency while effectively reducing the interaction costs.

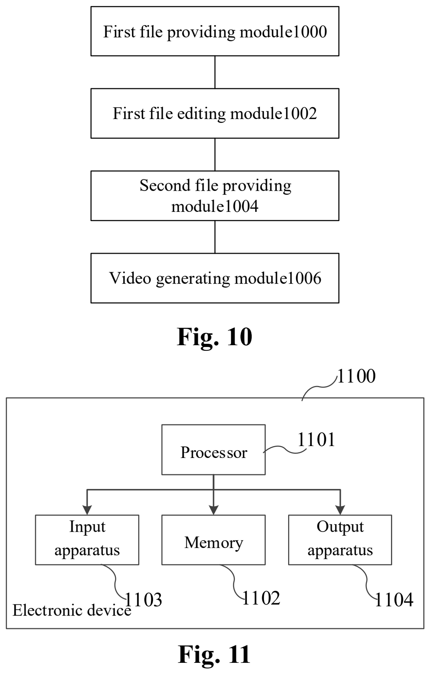

Corresponding to the video editing method as described above, FIG. 10 illustrates a schematic diagram of a structure of a video editing apparatus provided by the embodiments of the present disclosure. The apparatus may be implemented by software and/or hardware, and is typically integrated into an electronic device that may be a server, or the like. As shown therein, the apparatus includes:
a first file providing module 1000 for, in response to receiving a request from a first user to invite a second user to edit a first draft file, providing the first draft file to the second user, wherein the first draft file is a file uploaded and stored by the first user to the server, and the first draft file comprises materials, and editing information for indicating an editing operation for the materials;
a first file editing module 1002 for obtaining a second draft file based on an online editing operation of the second user for the first draft file;
a second file providing module 1004 for, in response to receiving a request from the second user to provide the second draft file to the first user, providing the second draft file to the first user; and
a video generating module 1006 for, in response to receiving a confirmation instruction for a specified draft file from the first user, generating a target video based on the specified draft file, wherein the specified draft file is the second draft file, or a file adjusted by the first user based on the second draft file.

In this way, the first user and the second user may directly interact with respect to draft files through a server, omitting redundant steps of packaging and transmitting files, and the like, which may improve the convenience for providing help to edit videos while effectively reducing the interaction costs.

In some implementations, the first draft file carries editing requirement information of the first user, and/or the second draft file carries editing comment information of the second user.

In some implementations, the first file providing module 1000 is specifically used for: authorizing the second user to edit the first draft file, and in response to receiving a file opening request from the second user, displaying the first draft file to the second user for allowing the second user to edit the first draft file online.

In some implementations, the apparatus further comprises:
a first request confirming module for, in a case of detecting that the first user sends a link of the first draft file to the second user via a chat page, confirming receipt of the request from the first user to invite the second user to edit the first draft file; and
a second request confirming module for, in a case of detecting that the second user sends a link of the second draft file via the chat page, confirming receipt of the request from the second user to provide the second draft file to the first user.

In some implementations, the apparatus further comprises: a posting module for, in response to receiving a request from the first user to post the target video, posting the target video on a specified platform, wherein the target video carries identifier information of the second user.

In some implementations, the apparatus further comprises: a re-invitation module for, in response to receiving a re-invitation request for the second draft file from the first user, providing a name list to the first user for allowing the first user to select a new second user from the name list.

In some implementations, a number of the second users is one or more; and the second user is a user in a friend list of the first user, or a user in an editor list provided by the server to the first user.

The video editing apparatus provided by the embodiments of the present disclosure may perform the video editing method provided by any of the embodiments of the present disclosure, which has functional modules and advantageous effects corresponding to the method.

As would be fully appreciated by those skilled in the art, for convenience and brevity of the description, see the corresponding process according to the method embodiments for details of the specific operation process of the apparatus embodiments described above, which are omitted herein.

FIG. 11 illustrates a schematic diagram of an electronic device provided by the embodiments of the present disclosure. As shown therein, the electronic device 1100 includes one or more processors 1101, and a memory 1102.

The processor 1101 may be a Central Processing Unit (CPU), or other processing unit with a data processing capability and/or an instruction execution capability, and may control other components in the electronic device 1100 to perform desired functions.

The memory 1102 may include one or more computer program products that may include various forms of computer-readable storage media, such as a volatile memory and/or a non-volatile memory. The volatile memory may include, for example, a Random Access Memory (RAM) and/or a cache, etc. The non-volatile memory may include, for example, a Read-Only Memory (ROM), a hard disk, a flash memory, or the like. The computer readable storage medium may store one or more computer program instructions, and the processor 1101 may run the program instructions, to implement the video editing method according to the embodiments of the present disclosure, as described above, and/or other desired functions. The computer readable storage medium may also store therein various contents such as an input signal, a signal component, a noise component, and the like.

In an example, the electronic device 1100 may also include: an input apparatus 1103 and an output apparatus 1104, and these components are interconnected via a bus system and/or a connection mechanism in other form (not shown).

In addition, the input apparatus 1103 may include a keyboard, a mouse, and the like.

The output apparatus 1104 may output various information to the outside, including determined distance information, direction information, and the like. The output apparatus 1104 may include, for example, a display, a speaker, a printer, a communication network and a remote output apparatus connected thereto, and the like.

For brevity, FIG. 11 only shows some of the components the electronic device 1100 that are related to the present disclosure, and omits therefrom components such as a bus, an input/output interface, and the like. moreover, according to the actual use, the electronic device 1100 may also include any other appropriate components.

In addition to the method and apparatus as described above, the embodiments of the present disclosure provide a computer program product including a computer program instruction, where the computer program instruction, when executed by a processor, causes the processor to perform the video editing method provided by the embodiments of the present disclosure.

The computer program product may be program code for performing operations of the present disclosure written by using one or more program design language or any combination. The program design language includes an object oriented program design language such as Java, C++, and the like, and further includes conventional process-type program design language such as "C" or similar program design language. The program code may be completely executed on a user computing device, partially executed on the user device, performed as an independent software packet, partially executed on the user computing device and partially executed on a remote computer, or completely executed on the remote computer or a server.

Further, the embodiments of the present disclosure further provide a computer readable storage medium, where the computer readable storage medium stores thereon instructions that, when running on a processor, cause the processor to implement the video editing method according to the embodiments of the present disclosure.

The computer readable storage medium may be any combination of one or more readable media. The readable medium may be a readable signal medium or a readable storage medium. The readable storage medium may be, for example, but not limited to, an electronic, magnetic, optical, electromagnetic, infrared, or semiconductor system, apparatus, or device, or any combination of the foregoing. More specific examples (a non-exhaustive list) of the readable storage medium may include, but are not limited to: an electrical connection having one or more wires, a portable computer diskette, a hard disk, a Random Access Memory (RAM), a Random-Only Memory (ROM), an Erasable Programmable Read-Only Memory (EPROM or flash memory), an optical fiber, a portable Compact Disc Read-Only Memory (CD-ROM), an optical storage device, a magnetic storage device, or any suitable combination of the foregoing.

The embodiments of the present disclosure further provide a computer program product including a computer program/instruction, where the computer program/instruction, when executed by a processor, implements the video editing method according to the embodiments of the present disclosure.

The relationship terms as used herein, for example, "first", "second", and the like, are only intended for distinguishing an entity or operation from a further entity or operation, but not necessarily require or imply that those entities or operations should have any of such actual relationships or orders. In addition, the terms "include", "comprise", or any other variant thereof are intended to cover a non-exclusive inclusion, such that a process, method, article, or device including a series of elements not only include those elements, but also cover other elements not listed explicitly, or further cover inherent elements of the process, method, article, or device. Unless specified otherwise, elements defined by the expression "including one..." do not exclude presence of additional identical elements in the process, method, article, or device including those elements.

The previous description of the disclosed embodiments is provided to enable those skilled in the art to implement or apply the present disclosure. Various modifications to these embodiments will be readily apparent to those skilled in the art, and the generic principles defined herein may be applied to other embodiments without departing from the spirit or scope of the present disclosure. Thus, the present disclosure is not intended to be limited to the embodiments shown herein but is to be accorded the widest scope consistent with the principles and novel features disclosed herein.

## Claims

1. A video editing method, applied to a server, comprising:
in response to receiving a request from a first user to invite a second user to edit a first draft file, providing the first draft file to the second user, wherein the first draft file is a file uploaded and stored by the first user to the server, and the first draft file comprises materials and editing information for indicating an editing operation for the materials;
obtaining a second draft file based on an online editing operation of the second user for the first draft file;
in response to receiving a request from the second user to provide the second draft file to the first user, providing the second draft file to the first user; and
in response to receiving a confirmation instruction for a specified draft file from the first user, generating a target video based on the specified draft file, wherein the specified draft file is the second draft file or a file adjusted by the first user based on the second draft file.

2. The method of claim 1, wherein the first draft file carries editing requirement information of the first user, and/or the second draft file carries editing comment information of the second user.

3. The method of claim 1, wherein providing the first draft file to the second user comprises:
authorizing the second user to edit the first draft file, and in response to receiving a file opening request from the second user, displaying the first draft file to the second user for allowing the second user to edit the first draft file online.

4. The method of claim 1, further comprising:
in response to detecting that the first user sends a link of the first draft file to the second user through a chat page, confirming receipt of the request from the first user to invite the second user to edit the first draft file; and
in response to detecting that the second user sends a link of the second draft file through the chat page, confirming receipt of the request from the second user to provide the second draft file to the first user.

5. The method of claim 1, further comprising:
in response to receiving a request from the first user to post the target video, posting the target video on a specified platform, wherein the target video further carries identifier information of the second user.

6. The method of claim 1, further comprising:
in response to receiving a re-invitation request for the second draft file from the first user, providing a name list to the first user for allowing the first user to select a new second user from the name list.

7. The method of claim 1, wherein a number of second users is one or more; and
the second user is a user in a friend list of the first user or a user in an editor list provided by the server to the first user.

8. A video editing apparatus, applied to a server, comprising:
a first file providing module for providing, in response to receiving a request from a first user to invite a second user to edit a first draft file, the first draft file to the second user, wherein the first draft file is a file uploaded and stored by the first user to the server, and the first draft file comprises materials and editing information for indicating an editing operation for the materials;
a first file editing module for obtaining a second draft file, based on an online editing operation of the second user for the first draft file;
a second file providing module for providing, in response to receiving a request from the second user to provide the second draft file to the first user, the second draft file to the first user; and
a video generating module for generating, in response to receiving a confirmation instruction for a specified draft file from the first user, a target video based on the specified draft file, wherein the specified draft file is the second draft file, or a file adjusted by the first user based on the second draft file.

9. An electronic device, comprising:
a processor; and
a memory for storing instructions executable by the processor;
wherein the processor is used for reading the executable instructions from the memory, and execute the instructions to implement the video editing method of any of claims 1-7.

10. A computer readable storage medium storing a computer program that is used for performing the video editing method of any of claims 1-7.

11. A computer program product comprising a computer program, wherein the computer program, when executed by a processor, implements the video editing method of any of claims 1-7.
